# EUROPEAN PATENT SPECIFICATION

(11) **EP 3 417 605 B1**
(45) Date of publication and mention of the grant of the patent: **06.11.2019**
(21) Application number: 17705840.1
(22) Date of filing: 14.02.2017
(51) Int. Cl.: G03B 17/02, H04N 5/225, G02B 13/14, H04N 5/33

(54) **EXPLOSION-PROOF CASE FOR A VIDEO CAMERA**
EXPLOSIONSSICHERES GEHÄUSE FÜR EINE VIDEOKAMERA
BOÎTIER ANTIDÉFLAGRANT POUR UNE CAMÉRA VIDÉO

(30) Priority: 17.02.2016 IT UB20160819
(43) Date of publication of application: 26.12.2018
(73) Proprietor: Tecnovideo S.r.l., 36030 Villaverla (Vicenza) (IT)
(72) Inventor: FABRIS, Christian, 36030 Villaverla ((Vicenza) (IT); CONTRO, Carlos Alberto, 36031Dueville (Vicenza) (IT)
(74) Representative: Bettello, Pietro
(86) International application number: PCT/EP2017/053237
(87) International publication number: WO 2017/140653

(56) References cited:
- EP-A2- 1 152 273
- CN-U- 201 909 672
- DE-A1-102008 029 407
- GB-A- 2 323 715
- JP-A- 2006 319 726

## Description

The present invention relates to an explosion-proof case for a video camera according to the general part of claim 1.

As is well known, in industrial applications and/or for process control, in addition to the standard video surveillance cameras (CCTV) working in the visible spectrum (part of the electromagnetic spectrum that falls between red and violet, including all colours perceptible to the human eye) special video cameras are used, known as "thermographic cameras", working in the zone called "infrared", where the electromagnetic spectrum has a greater wavelength than visible light.

As an example, we may cite thermographic cameras working in the long infrared wave zone (LWIR).

Thermographic cameras, when employed in environments having a potentially explosive atmosphere, must be placed inside explosion-proof cases.

One of the conditions to be met by such explosion-proof cases is the one that dictates that the viewing window, located at the front of the case, must be constructed with a special material, transparent to infrared radiation, rather than the ordinary float glass, which blocks infrared radiation.

Normally, the windows able to work in the electromagnetic spectrum of infrared are made of high purity germanium for optical use, particularly polished and coated with a layer of special materials (coating) in order to increase the transmission of infrared radiation.

It should be noted that a viewing window for a video camera made of germanium costs approximately twenty times more than a corresponding viewing window made of glass.

As an alternative to germanium with a wavelength 2-15 µm, sapphire (synthetic sapphire), or zinc-selenium (ZnSe) are used, albeit less frequently.

In order to be used in environments with a potentially explosive atmosphere, video cameras must get the explosion proof certification; in particular, they must be subjected to the tests defined by the IEC EN 60079-0:2010 § 26.4.2 Standard of December 2010, which aims to test the impact/shock resistance of the viewing window.

Operationally, the test consists in dropping a weight of 1 kg on the viewing window from a predetermined height; the test is passed if the window is not damaged in any way.

In cases for video cameras that operate in the electromagnetic field of the visible light, the viewing window is made of a tempered glass of considerable thickness, which allows passing the impact test; usually, with a 12 mm and larger thickness, tempered glass is sufficiently resistant to impact and is not damaged.

In contrast, viewing windows which employ material transparent to infrared radiation (germanium and other similar materials) do not pass the test, since this material is considerably fragile and does not resist the impact, is easily broken or, at least, the surface of said window is scratched as a result of the impact with the test sample.

According to the prior art, in order to obviate this drawback and thus allow cases made of material transparent to infrared radiation (germanium and other similar materials) to pass the impact test and obtain the certification, it is provided to place, at a predetermined distance from the viewing window, a metallic protective grid sufficiently resistant to stop the weight sample during the impact test.

Operationally, the presence of the grid ensures that the viewing window is not touched by the weight, since the impact is totally absorbed by the protective grid.

In practice, if the application of the grid allows obtaining the explosion-proof case certification, it exhibits the drawback that, being positioned in front of the viewing window to be protected, it hinders the visual field of the video camera installed inside of the case.

In essence, although the manufacturers of cases design grids that are specially shaped, so that the impact on the visual field is minimized, the presence of the grating that makes up the grid is always visible whereby, for certain objectives and/or video cameras, it hinders their visual field.

By way of example, we may cite the patent document CN201909672 U, which describes a viewing window consisting of two windows, made of germanium, mutually spaced apart, between which a metal grid is inserted.

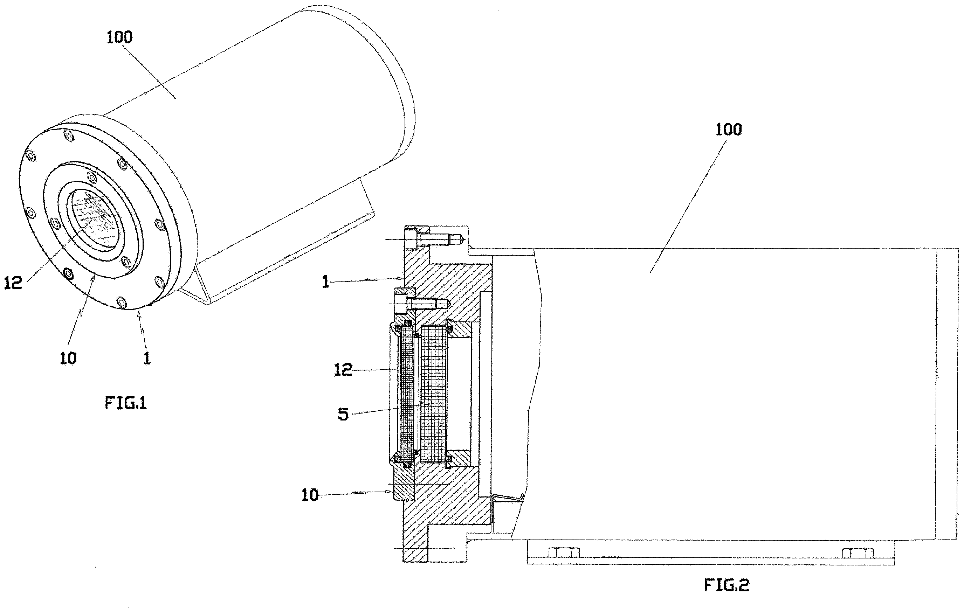

Upon an initial examination, this constructive solution advantageously allows using two windows of reduced thickness made of germanium (fig. 1, ref. 4 and 6, the references relate to the cited document) and therefore with a considerable economic advantage, leaving to the intermediate metal grid (fig. 1, ref. 5) the function of protecting the viewing window, the innermost one (fig. 1, ref. 6) if the additional window, the outermost one (fig. 1, ref. 4) undergoes damage.

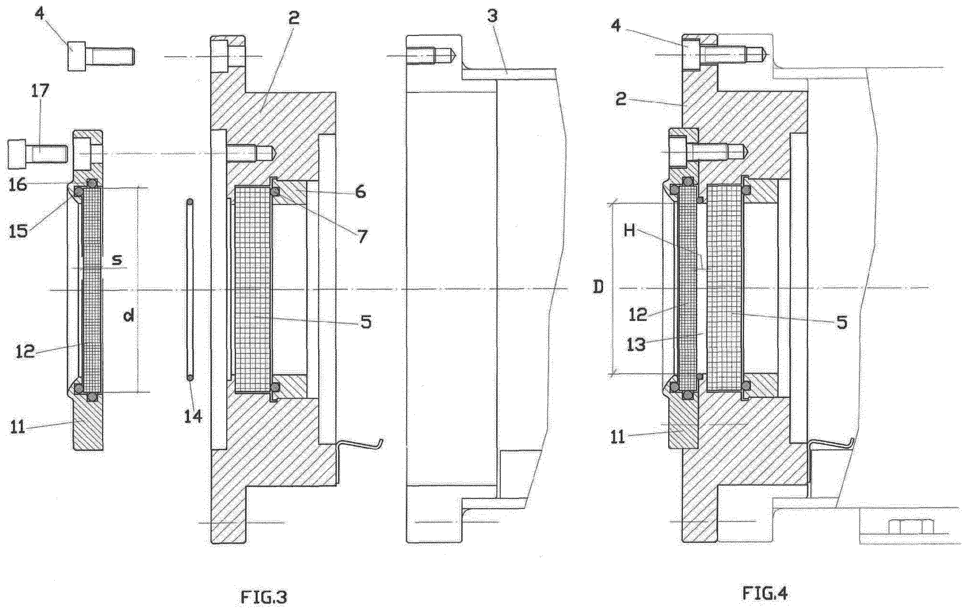

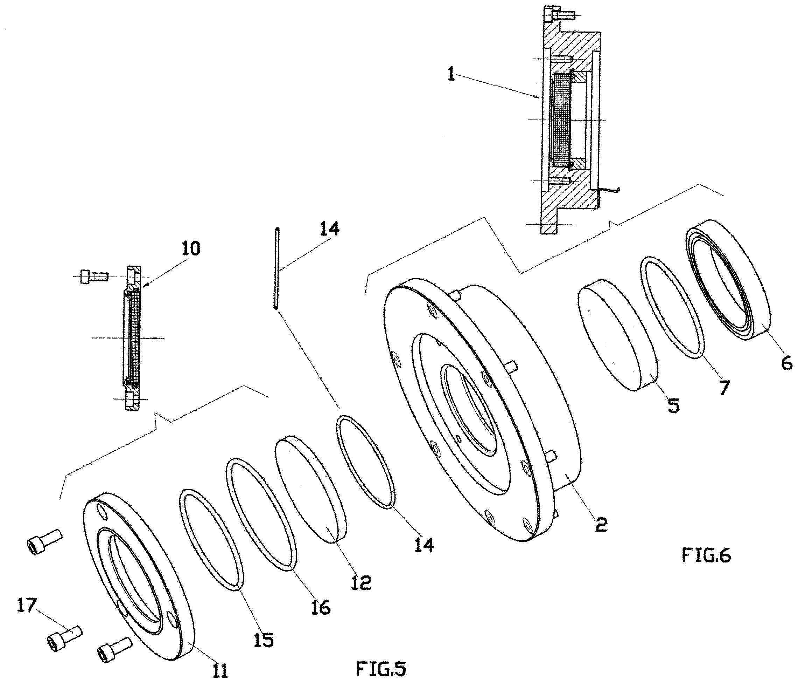

In contrast, upon a more thorough examination, this constructive solution has the drawback deriving from the fact that a metal grid is always used (fig. 1, ref. 5) which, even if it has a grating shaped differently (see figs. 2, 4 and 6) still gives rise to a remarkable visual hindrance which, in particular uses of the video camera, is not acceptable.

By way of example, the following additional patent documents are cited: CN 201 515 436 U, US 2012/154521 A1 and US 2012/008930 A1.

There is also document DE 10 2008 029 407 A1 which, apparently, is a prior art document since it describes an explosion-proof case containing a video camera adapted to operate in hazardous areas and which has in its interior an irradiator element of infrared rays, such radiation having the purpose of illuminating the scene that the video camera must shoot in low light conditions (darkness or night). This irradiator emits infrared at a wavelength of about 0.84 to 0.85 µm. Therefore, a viewing window may be used which uses standard glass; such glass could not be absolutely used in the technical video cameras, since standard glass blocks the passage of electromagnetic radiation in the spectrum between 2 and 15 µm, that is the aid of the present invention. Thus in our case, windows made of germanium or special materials such as sapphire and zinc-selenium transparent to such radiation spectrum must be used. These materials have a behavior against deflagration that is absolutely different from standard glass and therefore it is clear that the teachings of this document cannot be applied to the technical problem addressed by the present invention.

The object of the present invention is to provide a case for a video camera, in particular explosion-proof, provided with a protection of the viewing window which is free of the drawbacks of similar products of known type.

Specifically, the object of the invention is to provide a protection of the viewing window that does not absolutely require the use of a metal grid.

This object is achieved by overcoming a so-called "technical prejudice", according to which it is not possible to ensure the protection of the viewing window of a video camera case by means of the application only and exclusively of a second window, made of the same material as the viewing window, since currently it is believed that the thickness of the second window, necessary to ensure the protection of the viewing window, must necessarily be significant; hence a high economic cost for the purchase of the infrared transparent material (germanium and other materials suitable for the purpose) used to make the additional window, which would be likely to result in a considerable increase in the cost of production of the entire case, which would not be acceptable by the market.

Such a technical prejudice has been overcome by applying, in front of the viewing window, with commercially regular thickness, a further window, hereinafter referred to as "sacrificial" window, since it has the function of absorbing the impact energy, breaking during the impact test or in use, but without damaging and thus totally protecting the viewing window from the aforesaid accident.

In fact, this additional or "sacrificial" window has the same function of the protective metal grid but, being formed by a wall of a material able to work in the electromagnetic infrared spectrum (germanium and others), is not visible from the video camera, so that it is transparent for its entire extension.

Operationally, the design of the optimal "sacrificial" window was carried out based, primarily, on the following parameters:
a) Diameter/thickness ratio of the "sacrificial" window: a detailed study has been carried out on the sizing of sacrificial "window", in order to find the ideal measures of diameter and thickness of the window.
   The thickness/diameter ratio is in fact particularly critical: the larger the diameter of the window, the more fragile becomes the same when it is subjected to a shock/impact; accordingly, as the diameter is increased, the thickness of the window must also be increased to make it more resistant to the destructive impact, with the result that too thick windows would be too expensive.
   After performing the necessary calculations, the necessary practical technical tests (impact/break test) and the estimates of the costs of production of windows with different sizes, it was found that the ideal value of the "s/d" ratio between thickness "s" and diameter "d" of the window is between the following values: 1/12 ≤ s/d ≤ 1/8.
   By way of example, we may cite the manufacture of a "sacrificial" window of germanium having a thickness of 5 mm and diameter of 60 mm.
b) Ratio of width to diameter of the gap (partition space forming a sealed chamber between the two windows, the viewing and the "sacrificial"): this distance is of fundamental importance: a too little space between the two windows would cause the breakage of the viewing window during a shock/impact, since the incident mass would not be sufficiently slowed down by the "sacrificial" window and the shock wave would be transferred to the above viewing window, causing it to break; in contrast, a too large distance would allow the incident mass dropping to regain speed after the first impact with the "sacrificial" window, therefore making the damage of the aforesaid viewing window more likely.

In essence, the "gap" between the two windows must therefore be neither too small nor too large; concretely, after the necessary practical technical tests (impact/breakage test), it was found that the ideal value of the "H/D" ratio, between width "H" and diameter "D" of the gap or partition space is between the following values:
1/20 ≤ H/D ≤ 1/14, so as to allow for the impact energy to be dissipated before the debris and the blunt mass contact the viewing window, thus damaging it.

By way of example, we may cite the manufacture of a gap having a thickness of 3 mm and diameter of 50 mm.
c) Debris during the breaking the "sacrificial" window: the values defined in the above two parameters were defined taking account of debris that are produced at the time of breaking of the "sacrificial" window, which are in the form of small pieces having a maximum size of a few millimeters and which occupy the volume of the chamber defined between the two windows, being arranged randomly on the surface of the viewing window. In practice, therefore, a sort of buffer of debris is formed which cushions the stroke of the falling mass and protects the viewing window.
d) Elastic support points of the "sacrificial" window: particular attention has been paid in the design phase to the elastic support on which the "sacrificial" window rests, which consist of three rubber gaskets (O-ring type) having a suitable degree of elasticity; in particular, the "sacrificial" window leans at both its sides on two "O-rings", while the third "O-ring" is arranged over the entire outer circumference of said window.

In practice, the two "O-rings" resting on the two flat surfaces of the "sacrificial" window are meant to also ensure a watertight seal, to prevent the infiltration of dust and liquids in the gap between the two windows, while the third "O-ring" has been added as a "circumferential" seal, which mitigates the impact in stopping the run of the falling mass.

The invention will be better defined by the description of a possible embodiment thereof, given only by way of non-limiting example, with the aid of the accompanying drawings, in which:
- figs. 1 - 2 (dwg. I) show two views, respectively perspective and sectional, of a case according to the invention;
- figs. 3 - 4 (dwg. II) show two views, respectively exploded and sectional, of the front window provided with the "sacrificial" window of the invention;
- figs. 5 - 6 (dwg. III) show exploded views, respectively, of the assembly of the protective "sacrificial" window and the assembly of the viewing window.

As is seen in the figures, the video camera case 100, in particular of the explosion-proof type, comprises a viewing window, indicated as a whole with reference numeral 1, consisting of a flange 2, fixed to body 3 of the case by means of screws 4, where the transparent viewing disc 5 is inserted, retained by a ring nut 6 with an intermediate "O-ring" 7, all as known per se.

The protection of the viewing window 1 is achieved by the application, on the front of the viewing window 1, of a second window, indicated as a whole with reference numeral 10, consisting of a shaped ring 11, which retains a second transparent disc 12, which is positioned parallel to and spaced apart from the previous transparent disc 5, so as to form an air chamber 13.

The second window 10 is referred to as "sacrificial" since when it is hit by a blunt object, said transparent disc 12 cracks until it breaks, but protects the transparent disc 5, located more internally.

Moreover, the transparent disc 12 is mounted leaning against an "O-ring" 14, which acts as a sealing means of the air chamber 13 and is retained by two additional "O-rings", a front ring 15 and a circumferential ring 16, to provide an elastic support of said transparent disc.

The entire second window, or "sacrificial" window 10 is removably placed, by means of screws 17, on flange 2 of the front window 1.

The transparent disc 12 of the "sacrificial" window 10 is made of the same material transparent to infrared radiation, such as germanium or other materials suitable for the purpose, with which the transparent disc 5 of the viewing window 1 is made.

To highlight the advantage of the invention, by way of example, we may cite the operating condition in which the video signal obtained from the video camera is managed by special software, which analyzes the image to extract particular information.

In this condition, the video camera is used specifically as a sensor to detect, in particular, the temperature of the filmed objects, for which the use of the grid (known method) would be particularly harmful, because it would alter the measurement made, in some cases making the images/information provided by the video camera itself unusable.

The invention thus conceived is susceptible of modifications and variations, and its details may be replaced by technically equivalent elements, provided that all falls within the inventive concept defined by the following claims.

## Claims

1. EXPLOSION-PROOF CASE FOR A VIDEO CAMERA, to be used in environments having a potentially explosive atmosphere, said case being provided to contain thermographic cameras right inside, used as sensors for detecting the temperature of filmed objects, said case mounting a viewing window (1) provided with a disc (5) made of an infrared radiation transparent material having a passband of 2-15 µm, such as Germanium, Sapphire, Synthetic Sapphire, Zinc-Selenium or ZnSe, and that it is provided with a protection for said viewing window (1), which complies with the IEC EN 60079-0:2010 standard, § 26.4.2 of December 2010, defining how to test the shock/impact resistance of a blunt mass against a viewing window, said case (100) providing that the protection of the viewing window (1) only and exclusively consists of a further window (10), arranged in front of said viewing window (1) and provided with a transparent disc (12),
said case **being characterised in that** the "s/d" ratio, between the thickness "s" and the diameter "d" of the transparent disc (12) of the window (10) is comprised between the following values: 1/12 ≤ s/d ≤ 1/8.

2. EXPLOSION-PROOF CASE FOR A VIDEO CAMERA (100), according to claim 1, **characterised in that** the transparent disc (12) of the window (10), also named "sacrificial" window, is arranged spaced apart from the transparent disc (5) of the viewing window (1) so that between the two discs (5, 12) a "gap" is formed, defining an air bearing, contained within a sealing chamber (13).

3. EXPLOSION-PROOF CASE FOR A VIDEO CAMERA (100), according to claim 2, **characterised in that** the value of "H/D" ratio, between the width "H" and the diameter "D" of the "gap" or dividing space between the two transparent discs (5, 12) is comprised between the following values: 1/20 ≤ H/D 1/14, so as to allow for the impact energy to be dissipated before the debris and the blunt mass contact the viewing window (1) thus damaging it.

4. EXPLOSION-PROOF CASE FOR A VIDEO CAMERA (100), according to one or more of the previous claims, **characterised in that** the transparent disc (12) of the "sacrificial" window (10) is made of the same infrared radiation transparent material as the transparent disc (5) of the viewing window (1).

5. EXPLOSION-PROOF CASE FOR A VIDEO CAMERA (100), according to one or more of the previous claims, **characterised in that** the transparent disc (12) of the "sacrificial" window (10) rests and is retained on an elastic support.

6. EXPLOSION-PROOF CASE FOR A VIDEO CAMERA, according to claim 5, **characterised in that** the elastic support of the transparent disc (12) of the "sacrificial" window (10) is made up of a O-ring (14), serving as a sealing means of the air chamber (13) and of two further O-rings (15, 16), respectively arranged in a front and circumferential position on the above-mentioned transparent disc (12).

7. EXPLOSION-PROOF CASE FOR A VIDEO CAMERA (100), according to one or more of the previous claims, **characterised in that** the "sacrificial" window (10) is removably placed, by means of screws (17), on the flange (2) of the front window (1).

## Patentansprüche

1. EXPLOSIONSSICHERES GEHÄUSE FÜR EINE VIDEOKAMERA zur Verwendung in Umgebungen mit potentiell explosiver Atmosphäre, wobei das Gehäuse bereitgestellt ist, um genau in seinem Inneren thermographische Kameras zu enthalten, die als Sensoren zum Detektieren der Temperatur von gefilmten Objekten verwendet werden, wobei in dem Gehäuse ein Sichtfenster (1) montiert ist, das mit einer Scheibe (5) aus einem für Infrarotstrahlung transparenten Material mit einem Passband von 2-15 µm, wie z.B. Germanium, Saphir, synthetischem Saphir, Zinkselen oder ZnSe, versehen ist, und das mit einem Schutz für das Sichtfenster (1) versehen ist, der der Norm IEC EN 60079-0:2010, § 26.4.2, Dezember 2010, entspricht, die definiert, wie die Stoß-/Aufprall-Festigkeit einer stumpfen Masse gegen ein Sichtfenster zu testen ist, wobei das Gehäuse (100) dafür sorgt, dass der Schutz des Sichtfensters (1) einzig und ausschließlich aus einem weiteren Fenster (10) besteht, das vor dem Sichtfenster (1) angeordnet und mit einer transparenten Scheibe (12) versehen ist,
wobei das Gehäuse **dadurch gekennzeichnet ist, dass** das "s/d"-Verhältnis zwischen der Dicke "s" und dem Durchmesser "d" der transparenten Scheibe (12) des Fensters (10) im Bereich zwischen den folgenden Werten enthalten ist: 1/12 ≤ s/d ≤ 1/8.

2. EXPLOSIONSSICHERES GEHÄUSE FÜR EINE VIDEOKAMERA (100) nach Anspruch 1, **dadurch gekennzeichnet, dass** die transparente Scheibe (12) des Fensters (10), das auch als "Opfer"-Fenster bezeichnet wird, von der transparenten Scheibe (5) des Sichtfensters (1) beabstandet angeordnet ist, so dass zwischen den beiden Scheiben (5, 12) ein "Spalt" gebildet wird, der ein Luftlager definiert, das innerhalb einer Dichtungskammer (13) enthalten ist.

3. EXPLOSIONSSICHERES GEHÄUSE FÜR EINE VIDEOKAMERA (100) nach Anspruch 2, **dadurch gekennzeichnet, dass** der Wert des "H/D"-Verhältnisses zwischen der Breite "H" und dem Durchmesser "D" des "Spalts" oder des Trennraums zwischen den beiden transparenten Scheiben (5, 12) im Bereich zwischen den folgenden Werten enthalten ist: 1/20 ≤ H/D ≤ 1/14, um zu ermöglichen, dass die Aufprallenergie verteilt wird, bevor Trümmer und die stumpfe Masse das Sichtfenster (1) kontaktieren und dieses dadurch beschädigen.

4. EXPLOSIONSSICHERES GEHÄUSE FÜR EINE VIDEOKAMERA (100) nach einem oder mehreren der vorstehenden Ansprüche, **dadurch gekennzeichnet, dass** die transparente Scheibe (12) des "Opfer"-Fensters (10) aus demselben für Infrarotstrahlen transparenten Material wie die transparente Scheibe (5) des Sichtfensters (1) hergestellt ist.

5. EXPLOSIONSSICHERES GEHÄUSE FÜR EINE VIDEOKAMERA (100) nach einem oder mehreren der vorstehenden Ansprüche, **dadurch gekennzeichnet, dass** die transparente Scheibe (12) des "Opfer"-Fensters (10) auf einem elastischen Träger aufliegt und davon fixiert wird.

6. EXPLOSIONSSICHERES GEHÄUSE FÜR EINE VIDEOKAMERA nach Anspruch 5, **dadurch gekennzeichnet, dass** der elastische Träger der transparenten Scheibe (12) des "Opfer"-Fensters (10) aus einem O-Ring (14), der als Dichtmittel der Luftkammer (13) dient, und aus zwei weiteren O-Ringen (15, 16) besteht, die jeweils in einer Front- bzw. Umfangsposition über der oben erwähnten transparenten Scheibe (12) angeordnet sind.

7. EXPLOSIONSSICHERES GEHÄUSE FÜR EINE VIDEOKAMERA (100) nach einem oder mehreren der vorstehenden Ansprüche, **dadurch gekennzeichnet, dass** das "Opfer"-Fenster (10) mittels Schrauben (17) auf dem Flansch (2) des Frontfensters (1) abnehmbar platziert ist.

## Revendications

1. BOÎTIER ANTI-EXPLOSION POUR CAMÉRA VIDÉO, destiné à être utilisé dans des environnements présentant une atmosphère potentiellement explosive, ledit boîtier étant prévu pour contenir des caméras thermographiques directement à l'intérieur, servant de capteurs pour la détection de la température d'objets filmés, ledit boîtier supportant une fenêtre de visualisation (1) munie d'un disque (5) en matériau transparent à rayonnement infrarouge, disposant d'une bande passante comprise entre 2 et 15 µm, tel que le germanium, le saphir, le saphir synthétique, le zinc-sélénium ou ZnSe, et pourvu d'une protection de ladite fenêtre (1), conforme à la norme CEI EN 60079-0:2010, § 26.4.2 de décembre 2010, définissant la manière de tester la résistance au choc/à l'impact d'une masse émoussée par rapport à une fenêtre de visualisation, ledit boîtier (100) permettant que la protection de la fenêtre de visualisation (1) consiste uniquement et exclusivement en une autre fenêtre (10), disposée devant ladite fenêtre de visualisation (1) et munie d'un disque transparent (12),
ledit boîtier **étant caractérisé en ce que** le rapport « s/d » entre l'épaisseur « s » et le diamètre « d » du disque transparent (12) de la fenêtre (10) est compris entre les valeurs suivantes : 1/12 ≤ s/d ≤ 1/8.

2. BOÎTIER ANTI-EXPLOSION POUR CAMÉRA VIDÉO (100) selon la revendication 1, **caractérisé en ce que** le disque transparent (12) de la fenêtre (10), également appelé fenêtre « sacrificielle », est disposé à distance du disque transparent (5) de la fenêtre de visualisation (1) de manière à former entre les deux disques (5, 12) un « intervalle » définissant un palier à air, contenu dans une chambre d'étanchéité (13).

3. BOÎTIER ANTI-EXPLOSION POUR CAMÉRA VIDÉO (100) selon la revendication 2, **caractérisé en ce que** la valeur du rapport « H/D », entre la largeur « H » et le diamètre « D » de « l'intervalle » ou de l'espace de division entre les deux disques transparents (5, 12) est comprise entre les valeurs suivantes : 1/20 ≤ H/D ≤ 1/14, pour permettre la dissipation de l'énergie d'impact avant que le contact des débris et de la masse émoussée avec la fenêtre de visualisation (1) puissent endommager celle-ci.

4. BOÎTIER ANTI-EXPLOSION POUR CAMÉRA VIDÉO (100) selon une ou plusieurs des revendications précédentes, **caractérisé en ce que** le disque transparent (12) de la fenêtre « sacrificielle » (10) est constitué du même matériau transparent à rayonnement infrarouge que le disque transparent (5) de la fenêtre de visualisation (1).

5. BOÎTIER ANTI-EXPLOSION POUR CAMÉRA VIDÉO (100) selon une ou plusieurs des revendications précédentes, **caractérisé en ce que** le disque transparent (12) de la fenêtre « sacrificielle » (10) repose et est maintenu sur un support élastique.

6. BOÎTIER ANTI-EXPLOSION POUR CAMÉRA VIDÉO selon la revendication 5, **caractérisé en ce que** le support élastique du disque transparent (12) de la fenêtre « sacrificielle » (10) est constitué par un joint torique (14) servant de moyen d'étanchéité de la chambre à air (13) et de deux autres joints toriques (15, 16), respectivement disposés dans une position frontale et circonférentielle sur le disque transparent (12) susmentionné.

7. BOÎTIER ANTI-EXPLOSION POUR CAMÉRA VIDÉO (100) selon une ou plusieurs des revendications précédentes, **caractérisé en ce que** la fenêtre « sacrificielle» (10) est placée de manière amovible, au moyen de vis (17), sur la bride (2) de la fenêtre avant (1).
